Europäisches Patentamt

European Patent Office

Office européen des brevets

(11) Publication number: **0 049 157**
A2

(19)

# EUROPEAN PATENT APPLICATION

(12)

(21) Application number: 81304500.2

(51) Int. Cl.³: **G 06 F 3/04**

(22) Date of filing: 29.09.81

(30) Priority: 29.09.80 US 191629
29.09.80 US 191875
29.09.80 US 191580

(43) Date of publication of application: 07.04.82
Bulletin 82/14

(84) Designated Contracting States: **BE CH DE FR GB IT LI NL SE**

(71) Applicant: Honeywell Information Systems Inc.,
200 Smith Street, Waltham Massachusetts 02154 (US)

(72) Inventor: Hirtle, Allen C., 5 Silver Hill Road, Acton
Massachusetts 01720 (US)
Inventor: Goss, Gary J., 93 Harris Street, Acton
Massachusetts 01720 (US)
Inventor: Kachemov, Angelo David, RFD 3 Box 348A,
Plattsburgh, NY 12901 (US)
Inventor: Yu, Kin C., 32 Westwood Street, Burlington
Massachusetts 01803 (US)

(74) Representative: Harman, Michael Godfrey et al,
Honeywell Control Systems Ltd. Patent Department
Charles Square, Bracknell Berks RG12 1EB (GB)

(54) Polling means for communication multiplexer.

(57) Polling means for polling a plurality of devices with receive and transmit channel numbers. The channel numbers are held in a register 504 and a recirculatory FIFO memory 500, and circulated through the register and memory, the channel number in register 504 polling the devices via line adapter 66. The channel number sequence defines the priorities of the channels, receive channels first then transmit channels. On a device response, the channel number is held in register 504 while the other channel numbers recirculate, so that on the next polling, a responding receive channel has top priority while a responding transmit channel has bottom priority. A counter 514 determines the mode of operation (initialize, scan, etc.) and a flip-flop 524 provides the receive/transmit bit of each channel number.

EP 0 049 157 A2

- 1 -

## POLLING MEANS FOR COMMUNICATION MULTIPLEXER

This invention relates primarily to data processing systems and more particularly to a communication multiplexer using a variable priority scheme of a number of devices coupled to the communication multiplexer via communication lines.

A data processing system may include a central processing unit, a main memory, and a plurality of input/output devices. Since a number of input/output devices may request operation at the same time with the central processing unit or the main memory, a system of priorities must be established so that the system can operate with the input/ output devices in an orderly fashion. A number of polling techniques of the input/output devices are known, including a "radial selector" or a private line arrangement, and a "daisy chain" or party line arrangement. In either arrangement, the input/output devices may be passive and respond to a polling signal which queries each input/output device in turn, or they may be active and generate their own interrupt signal.

The simpler systems have fixed and predetermined priority sequences, so that some devices are able to "hog" the system to the substantial exclusion of others. Although considerable elaborations of these systems are possible, there is nevertheless still a problem in achieving a system in which the priorities of the various devices can be easily varied.

The main object of the present invention is therefore to provide a simple yet flexible means of assigning and varying the priorities of devices attached to a communications multiplexer.

- 2 -

Accordingly the present invention provides polling means in a communication multiplexer which couples a plurality of devices to a main memory and CPU, characterized by a register and recirculatory memory which together contain a sequence of receive and transmit channel numbers which can be circulated through the register and memory, the devices being polled with the channel numbers as they appear in the register, and the channel number in the register being temporarily excluded from the circulation of the channel numbers on a response from a device so as to change the relative priorities of the channels appropriately.

A specific feature of the present apparatus is that it is capable of servicing a plurality of devices including a single synchronous device and up to 14 asynchronous devices, giving top priority to the synchronous communication line in a receive mode and second priority to the synchronous communication line in a transmit mode.

A data processing system embodying the invention will now be described, by way of example, with reference to the drawings, in which:

Figure 1 is a block diagram of the system, showing the communications multiplexer in detail, and

Figure 2 is a detailed diagram of the priority scan unit of the communications multiplexer.

## INTRODUCTORY SUMMARY

A communication system includes a communication controller and a number of devices, typically cathode ray tube displays, each coupled to the communication controller via a communication line. Each communication line is operative as a receive channel wherein data flows from the device, or as a transmit channel wherein data flows to the device. Each communication line is identified by a receive channel number and a transmit channel number. This invention gives high priority to a most recently used receive channel operative in a burst mode and equal priority to all transmit channels.

During initialization, a counter/register in the communication controller stores a list of channel numbers in a predetermined sequence in a first in-first out memory (FIFO). The receive channel numbers, which are loaded into the FIFO first, have a high priority followed by the transmit channel numbers which have a low priority.

The communication channels are polled by loading a channel number into the counter/register from the FIFO output and sending that channel number to all communication lines. If no communication line responds, then that channel number is loaded into the FIFO input and the next channel number is loaded into the counter/register.

When a communication channel requires service, it responds to its channel number which then remains stored in the counter/register. The remaining channel numbers are recirculated in FIFO so that the first receive channel number is at the FIFO output.

When the servicing of the communication channel is completed, the polling is continued. If a receive channel was serviced, then that receive channel is polled immediately.

This gives top priority to a high-speed receive channel. If a transmit channel is serviced, then the transmit channel number is loaded into the FIFO input via a multiplexer and the first receive channel is loaded from the FIFO output to the counter/register. This assures the first priority to the receive channels.

The channel number of the serviced communication channel is loaded into the FIFO in the next position. Thus, a receive channel number is placed at the beginning of the receive channel sequence; and a transmit channel number is placed at the end of the transmit channel sequence.

The communication subsystem may process 16 asynchronous communication lines or 1 synchronous communication line and 14 asynchronous communication lines. The synchronous communication line in a receive mode is given top priority, the synchronous communication line in a transmit mode is given second priority, the asynchronous communication lines in a receive mode are given third priority and the asynchronous communication lines in a transmit mode are given the lowest priority.

The synchronous communication line is responsive to channel number $00_{16}$ when in the receive mode and responsive to channel number $01_{16}$ when in the transmit mode. Apparatus in the communication controller translates the transmit channel number $01_{16}$ to $10_{16}$ and transfers the translated channel number to the paging logic to enable the synchronous communication line to be processed in the communication controller in the transmit mode.

## DETAILED DESCRIPTION

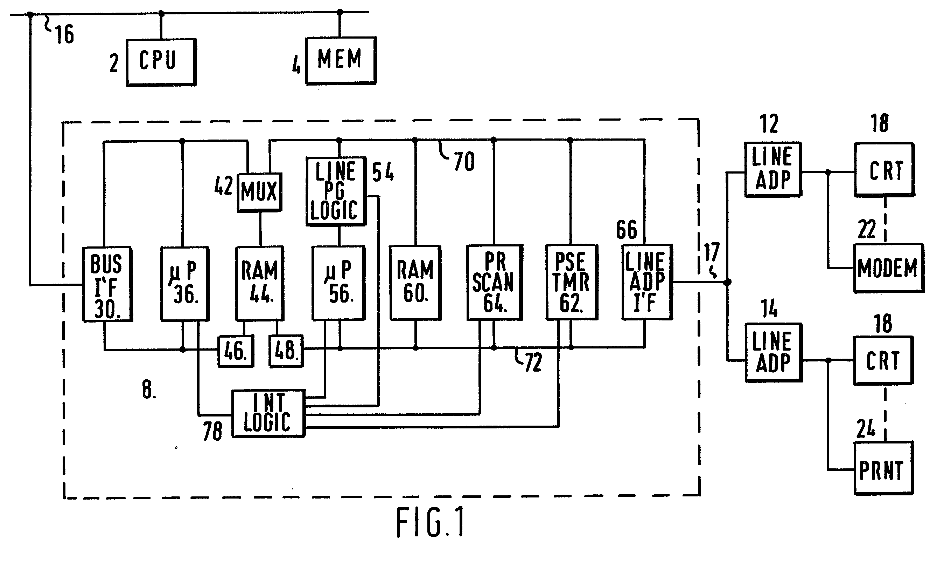

Figure 1 is a block diagram of the data processing system, which comprises a CPU 2, a main memory 4, and a communications multiplexer 8 coupled to a system bus 16. The communication multiplexer 8 is also coupled via a line adapter bus 17 to two line adapters 13 and 14, which are in turn coupled to devices such as CRT's 18, a modem 22, and a line printer 24.

The communication multiplexer 8, which is shown in simplified form, consists of an I/O section controlled by an I/O microprocessor 36 and a line section controlled by a line microprocessor 56. The line section includes a line address bus 70 and a line data bus 72 to which are coupled the line microprocessor 56, a random access memory 60, a pause timer 62, a priority scan unit 64, a line adapter interface 66 (which is also coupled to the line adapter bus 17), and a shared memory 44 (via a multiplexer 42 and a transceiver 48 as shown). Line paging logic 54 is interposed between the line microprocessor 56 and the line address bus 70. The I/O section has its microprocessor 36 similarly coupled to the shared memory 44 and a bus interface unit 30 which is also coupled to the system bus 16. An interrupt logic unit 78 is coupled to the two microprocessors 36 and 56 and to the priority scan unit 64.

The I/O microprocessor 36 and the line microprocessor 56 communicate with each other through the shared memory 44 which stores the line control tables (LCT) and communication control blocks (CCB) and a number of mailboxes. Each of the devices is assigned an LCT. Half of the LCT controls the device in a transmit mode. Similarly, each of the devices is assigned a CCB for each receive block transfer with main memory 4, and a CCB for each transmit block transfer with main memory 4.

The RAM 60 stores the channel control program (CCP) which processes the data stream of a communication channel. A CCP pointer in the LCT points to the next CCP location in RAM 60 to be referenced by the channel when a channel request interrupt is serviced. The CCP typically controls the transfer of characters between the line adapter interface 66 and shared RAM 44 through line microprocessor 56, performs the check redundant character computation and performs minor editing.

Line paging logic 54 receives a virtual address which is converted into a real address when addressing the LCT or CCB areas in shared RAM 44. Line paging logic 54 allows a single program to address the LCT or CCB associated with any communication channel (2 channels per line: a receive channel and a transmit channel).

The pause timer 62 detects if a CCP is running too long by counting the number of accesses to RAM 60. If the number of accesses exceeds a predetermined number, typically 100, the line microprocessor 56 is interrupted, the CCP is temporarily deactivated, and a CCP return address is stored in a queue in work RAM 52.

The priority scan unit 64 accepts data requests associated with each channel of the device adapters and establishes the priorities for servicing the channels in a dynamically variable sequence.

The interrupt logic 78 is responsive to a signal from the priority scan unit 64 to interrupt line microprocessor 56 to start a polling of the devices, and to a signal from line adapter 66 to interrupt the line microprocessor 56 when a device responds to the poll.

- 7 -

This general system is described in more detail in
our copending application, I/O data processing system.
No. 81304501.0

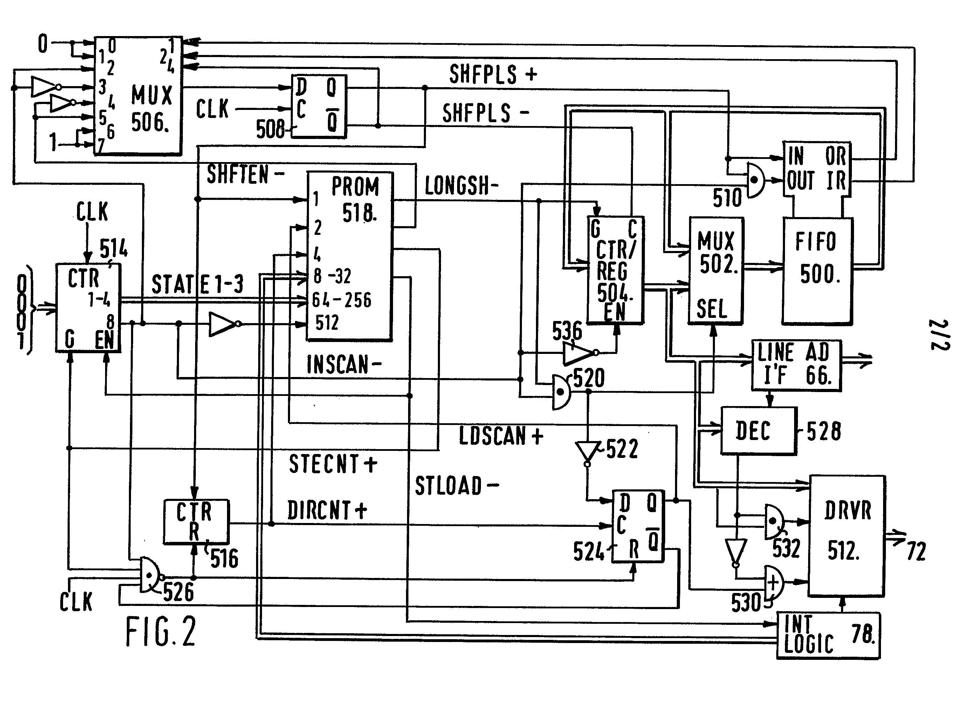

The priority scan unit 64 is shown in detail in
Figure 2.   The major features of this unit are as follows.

A mode counter 514 is initially set to a count of 8,
then is reset to a count of 0, and is then advanced step
by step through its counts to a final count of 5.   These
counts define 7 modes 1 to 7 respectively.   Each mode is
subdivided into a number of submodes, depending on the states
of certain signals;  these submodes are listed as columns
A to V in the Table, and will generally be referred to as
columns.

The channel numbers are held by a counter/register 504 and
a FIFO register 500, FIFO 500 having 31 locations so that all
32 channel numbers can be accommodated, one being in the
counter/register 504.   The FIFO 500 feeds the counter/
register 504, which in turn feeds the FIFO 500 via a MUX
(multiplexer) 502, so that the channel numbers can be
recirculated.   In addition, the FIFO 500 feeds the MUX 502, so
that a selected channel number can be retained in counter/
register 504 and the remaining channel numbers recirculated
from the FIFO output directly back to its input.

The channel numbers each consist of a single bit which
is 0 for receive channels and 1 for transmit channels, together
with a 4-bit number which defines the respective device
attached to the line adapter.   The 4-bit numbers are held
in the FIFO 500 and counter/register 504, which each hold
only 4-bit numbers.   The receive/transmit bit is held by a LDSCAN

| | | Mode | 1 | | | | 2 | | | 3 | | | 4 | | | 5 | | 6 | | | | | 7 | |
|---|---|---|---|---|---|---|---|---|---|---|---|---|---|---|---|---|---|---|---|---|---|---|---|---|
| | | Column (submode) | A | B | C | D | E | F | G | H | I | J | K | L | M | N | O | P | Q | R | S | T | U | V |
| Flip-flop 508 | 1 | SHFPLS+ | x | x | x | x | x | x | x | x | x | x | x | x | x | x | x | x | x | x | x | x | 1 | 0 |
| Flip-flop 524 | 2 | LDSCAN+ | 0 | 1 | 0 | 1 | x | x | x | 0 | 0 | 1 | 0 | 0 | 1 | x | x | x | 0 | 1 | 0 | 1 | x | x |
| Counter 516 | 4 | DIRCNT+ | 0 | 0 | 1 | 1 | x | x | x | 0 | 1 | x | 1 | 0 | x | 0 | 1 | x | x | x | x | x | x | x |
| Interrupt Logic 78 | 8 | LRDYSY- | x | x | x | x | 1 | 0 | 0 | x | x | x | x | x | x | x | x | x | x | x | x | x | x | x |
| | 16 | CCPRUN+ | x | x | x | x | x | 0 | 1 | x | x | x | x | x | x | x | x | 1 | 0 | 0 | 0 | 0 | x | x |
| | 32 | UP2NMI+ | x | x | x | x | x | x | x | x | x | x | x | x | x | x | x | x | 0 | 0 | 1 | 1 | x | x |
| Counter 514 | 64 | STATE3+ | 0 | 0 | 0 | 0 | 0 | 0 | 0 | 1 | 1 | 1 | 0 | 0 | 0 | 1 | 1 | 0 | 0 | 0 | 0 | 0 | 1 | 1 |
| | 128 | STATE2+ | 0 | 0 | 0 | 0 | 0 | 0 | 0 | 0 | 0 | 0 | 1 | 1 | 1 | 1 | 1 | 0 | 0 | 0 | 0 | 0 | 0 | 0 |
| | 256 | STATE1+ | 0 | 0 | 0 | 0 | 0 | 0 | 0 | 0 | 0 | 0 | 0 | 0 | 0 | 0 | 0 | 1 | 1 | 1 | 1 | 1 | 1 | 1 |
| | 512 | INSCAN+ | 1 | 1 | 1 | 1 | 0 | 0 | 0 | 0 | 0 | 0 | 0 | 0 | 0 | 0 | 0 | 0 | 0 | 0 | 0 | 0 | 0 | 0 |
| Outputs | | LONGSH- | 1 | | | 1 | 0 | 1 | 1 | 1 | 1 | 1 | 1 | 1 | 1 | 1 | 1 | 1 | 1 | 0 | | | 0 | 1 |
| | | SHFTEN- | 0 | | | 1 | 0 | 1 | 1 | 0 | 0 | 1 | 0 | 0 | 1 | 0 | 1 | 1 | 1 | 0 | | | 0 | 1 |
| | | STECNT+ | 0 | | | 0 | 0 | 0 | 1 | 0 | 1 | 1 | 0 | 1 | 1 | 0 | 1 | 0 | 1 | 1 | | | 0 | 0 |
| | | STLOAD- | 1 | | | 0 | 0 | 0 | 1 | 1 | 1 | 1 | 1 | 1 | 1 | 1 | 1 | 1 | 1 | 1 | | | 1 | 0 |

flip-flop 524. The channel number in counter/register 504 is coupled to the line adapter interface 66, since this has only to select the physical device. The full channel number, including the receive/transmit bit, is coupled from counter/register 504 and flip-flop 524 to a 5-bit driver unit 512, which passes the channel number out to the bus 72.

Control of the priority scan unit is achieved primarily by means of a PROM 518. This has 10 inputs; 4 from counter 514, defining the mode, 3 from the interrupt logic 78, which provides communication from the rest of the communication multiplexer to the priority scan unit, and 3 from elsewhere in the priority scan unit. These inputs are listed in the Table. The PROM has 4 outputs, which are also listed in the Table.

The priority scan unit also includes a flip-flop 508, which is primarily concerned with controlling the FIFO 500; a multiplexer 506, which controls the flip-flop 508, and a scale-of-16 counter 516 which controls the receive/transmit bit flip-flop 524.

It may be noted that signals are generally denoted by a 6-letter code followed by a sign; signals with the same code but opposite signs are complementary.

The major functions of the 7 modes are as follows.

Mode 1. This is an initialization mode, which is entered by the mode counter 516 being cleared to zero count. (Note that the most significant bit from this counter, INSCAN-, is inverted to INSCAN+ for application to PROM 518.) The FIFO 500 is loaded with 31 of the 32 channel numbers, and

the 32nd channel number is in the counter/register 504 at the end of initialization. The counter/register 504 is used as a counter to generate the channel numbers. The LDSCAN flip-flop 524 is correctly controlled to give the receive/transmit bit for the channel numbers during this initialization, though this bit is irrelevant in this mode. At the end of this mode, the channel numbers are

<u>FIFO 500</u>                                                    <u>504</u>

1E 1D 1C ... 11 10 OF OE OD ... 01 00     1F The numbers are in hexadecimal, so the first bit is the receive/transmit bit. The counter/register 504 can be regarded as being at either end of the FIFO 500; the channel number 00 is at the FIFO 500 output.

<u>Mode 2</u>    This is the scan mode, in which each of the 5-bit channel numbers in turn is sent to the devices. The device requesting service generates a signal in the interrupt logic 78 when receiving the channel number. The interrupt logic 78 interrupts the line microprocessor 56 to execute the channel request by means of a CCP. The polling involves the circulation of the channel numbers through the FIFO 500 and the register 504; when an interrupt is generated, this circulation stops. Thus if the interrupt occurs on channel number 05, the channel numbers are distributed thus when this mode stops.

<u>FIFO 500</u>                                                   <u>504</u>

04 03 02 01 00 1F 1E ... 10 OF ... 07 06 05

<u>Mode 3</u>    If a receive channel is operative, the remaining receive channels are circulated. If a transmit channel is operative, no action occurs. Thus the channel numbers will be distributed thus at the end of this mode:

FIFO 500                                                    504

OF OE ...06 04 03 ... 00 1F 1E ... 11 10    05

Mode 4    This is a housekeeping mode, in which the system prepares for the recirculation of transmit channel numbers around FIFO 500.

Mode 5    In this mode, transmit channels are recirculated. If a receive channel is operative, all transmit channels will be recirculated;  if a transmit channel is operative, some transmit channels will already have been recirculated in the polling mode (mode 2), and the remainder will be recirculated (apart, of course, from the operative channel number).    At the end of this mode, the channel numbers will be distributed thus:

FIFO 500                                                    504
1F 1E ... 11 10 OF OE ... 06 04 ... 01 00    05

Priority is given to receive channels by recirculating channel numbers in FIFO 500 until the first receive channel number is at the FIFO 500 output.

Mode 6    This mode starts with a WAIT until the line microprocessor 56 signals that the CCP is completed and signal CCPRUN+ falls from 1 to 0.    Then, if a receive channel is operative, if there is no timeout by pause timer 62, no action is taken, but if there is a timeout by the pause timer 62, a cycle is started to recirculate the receive channel number in register 504 into the FIFO 500 input.    This prevents the communication multiplexer 10 from "hanging up" in the event of a malfunction with a particular channel.

- 12 -

If a transmit channel is operative, a cycle is started to load the transmit channel number in register 504 into the FIFO 500.

Mode 7    If a receive channel is operative and there has been no timeout by pause timer 62, the system goes directly to mode 2 to recommence polling.   In any other case (receive channel operative and timeout of pause timer 62 occurred, or transmit channel operative), the channel number at the output of FIFO 500 is loaded into the counter/register 504 and the system returns to mode 2.   At the end of this mode, the channel numbers will be distributed as follows:

FIFO 500                                                                    504

05 1F 1E ... 10 0F 0E ... 07 06 04 03 ... 01    00

The effect of  a transmit channel (say channel 17) responding after a receive channel (channel 5) has responded will be briefly indicated.   Following the response of receive channel 5, channel number 05 is at the end of the list of channel numbers.   The list of channel numbers is recirculated during polling in mode 2 until channel 17 responds, giving:

FIFO 500                                                                    504

16 ... 10 0F ... 06 04 ... 00 05 1F ... 18    17

The remaining channel numbers are then recirculated in mode 5. giving:

FIFO 500                                                                    504

1F ... 18 16 ... 10 0F ... 06 04 ... 00 05    17

Polling then continues in mode 2.

Modes 2 to 5 provide top priority to a high-speed device whose receive channel number is loaded into counter/ register 504: next priority is given to the devices requesting the receive channel; the last priority is given to devices requesting the transmit channel. The last receive channel processed has the highest priority and the last transmit channel processed has the lowest priority.

The detailed functioning of the priority scan unit in its 7 modes of operation will now be considered.

Mode 1 - Initialize

PROM 518 provides the output signals as shown in columns A to D of the Table. FIFO 500 is loaded with 31 channel numbers, while the 32nd channel number $F_{16}$ remains stored in counter/ register 504. FIFO 500 stores 4 bits in each memory location with the fifth bit of each channel number stored in the LDSCAN flip-flop 524. The 16 receive channel numbers are loaded into FIFO 500 with flip-flop 524 reset, followed by 15 transmit channel numbers with flip-flop 524 set. The channel numbers are loaded into FIFO 500 sequentially from counter/register 504 with the transmit channel number $F_{16}$ remaining in counter/register 504 and flip-flop 524 set.

Signals LONGSH- and INSCAN+ at 1 cause counter/register 504 to operate as a counter. This counter was previously cleared to zero during the communication controller startup sequence. Signal INSCAN- at 0 forces the output signal from an AND gate 520 to 0 to cause multiplexer (MUX) 502 to pass the output signals of counter/register 504 to FIFO 500.

A shift pulse flip-flop 508 sets for each channel number written into FIFO 500 and resets to increment counter/register 504 to the next channel number. Resetting flip-flop 508 also increments a counter 516 which indicates when the last receive channel number and the last transmit channel number is stored in counter/register 504.

Signal IR at 1 indicates that the input of FIFO 500 is avilable. Signal OR at 1 indicates that the output of FIFO 500 is full. Signals OR and IR control a MUX 506 whose output sets or resets flip-flop 508 on the rise of a clock pulse CLK.

Initially counter/register 504 is reset to 0. Signals IR is at 1, OR is at 0, INSCAN+, the input to MUX 506, is at 1 and flip-flop 508 sets on the rise of clock pulse CLK. Signal SHFPLS+ at 1 applied to the IN terminal of FIFO 500 loads the output of counter/register 504 into FIFO 500 via MUX 502. Signal IR goes to 0 when the channel number is received from counter/register 504 and signal SHFPLS+ at 1 selects input terminal 4 of MUX 506. Signal SHFTEN- at 0 causes flip-flop 508 to reset. The rise of signal SHFPLS- increments register/counter 504 since signal INSCAN+, the output of an inverter 536, is at 1. As the channel number ripples through FIFO 500, signal IR again goes to 1. Signal OR may be at 1 for the next cycle. If this is the case, flip-flop 508 is set since the signal applied to terminal 3 of MUX 506, the complement of SHFTEN+, is at 1.

The rise of signal SHFPLS- increments counter 516. Flip-flop 524 is in a reset state for the first 16 channel numbers, identifying the channel numbers as receive channel numbers. When the 16th channel number $F_{16}$ is stored in counter/register 504, the carry output of counter 516 goes to 1. This signal is fed to PROM 518 to select column C of the Table. Flip-flop 524 sets on the fall of this signal

0049157

since the output of an inverter 522 is at 1.   This selects
column B of the Table.   The next 15 transmit channel numbers
are loaded into FIFO 500.   When the carry signal from counter
516 is again at 1, the PROM outputs of column D are selected.
Signal SHFTEN- is forced to 1 and signal STLOAD- is forced
to 0, preventing flip-flop 508 from setting and loading
counter 514 with 8   .   This forces signal INSCAN+ to 0.
Transmit channel number F$_{16}$ is stored in counter/register 504.

## Mode 2

The polling operation begins with output signal LRDYSY-
of interrupt logic 78 at 1, and the outputs of PROM 518 at 0 as
shown in column E.   Signals IR and OR are at 1 since the
output of FIFO 500 is full and the input is available.
Signal SHFTEN- at 1 and 0 causes flip-flop 508 to set and
reset respectively.

The output of AND gate 510 is at 1.   This results in the
channel number being read out of FIFO 500 and stored in counter/
register 504.   The previous channel number which was being
emitted to the device via line adapter 66 is now loaded into
FIFO 5oo via MUX 502.   The polling operation continues with
the carry output of counter 516 causing flip-flop 524 to
toggle on successive falls since the output of inverter 522
is at 1.

This polling continues until a device requesting service
responds to the channel number emitted from counter/register
504 by forcing signalling to the interrupt logic 78.   This
sets signals LONGSH- and SHFTEN- to 1 as shown in column F.
This stops the polling by preventing flip-flop 508 from
setting, and retains the interrupting channel number in
counter/register 504.   The interrupt logic 78 interrupts line
microprocessor 56.   The channel program is started as indicated

- 16 -

by signal CCPRUN+ going to 1. Then as shown in Column G, all the outputs of PROM 518 are at 1 and counter 514 is incremented by signal STECNT+ at 1 to advance the priority scan into the next mode.

Mode 3

a) Receive channel operative.

Assuming that a receive channel responded to its channel number, the system state is column H. AND gate 520 produces a 1, so that MUX 502 selects the FIFO output. Also, flip-flop 508 cycles as described above since signal SJFTEN+ is at 1. Receive channel numbers recirculate from the output to the input of FIFO 500 via MUX 502 until counter 516 produces a carry signal. This advances the system state to column I with signal STECNT+ at 1, incrementing counter 514 on the rise of clock pulse CLK and advancing the system state to Mode 4.

b) Transmit channel operative.

Since flip-flop 524 is set and signal LDSCAN+ is at 1, the PROM 518 outputs are all at 1 as shown in column J, thereby incrementing counter 514 and placing the system in Mode 4.

Mode 4

a) Receive channel operative.

Since the carry signal from counter 516 is still at 1 during the recirculation of the last receive channel number from the input to the output of FIFO 500, then as shown in column K, signal SHFTEN- at 0 allows flip-flop 508 to continue cycling. When the carry signal from counter 516 falls to 0, signal STECNT+ goes to 1 as shown in column L. This increments counter 514 and advances the system state to Mode 5 as the transmit channel numbers begin to recirculate from output to input of FIFO 500 via MUX 502.

b) Transmit channel operative.

Since flip-flop 524 is set, then as shown in column M all output signals of PROM 518 are at 1. This increments counter 514 and advances the system to Mode 5.

Mode 5

a) Receive channel operative.

PROM 518 output signals LOMGSH- at 1 and SHFTEN- at 0 as shown in column N allow the transmit channel numbers to continue to recycle from the output to the input of FIFO 500 via MUX 502 since flip-flop 508 is setting and resetting. As the last transmit channel number is recirculated, the carry signal from counter 516 goes to 1 and, as shown in column O, all PROM 518 output signals go to 1, which advances the priority scan unit 64 to Mode 6. FIFO 500 has the old first receive channel number at the output and the last transmit channel number in the last position.

b) Transmit channel operative

The PROM 518 output signals as shown in columns N and O cause the transmit channel numbers to recirculate as described in Mode 5a above.

Mode 6

The PROM output signals shown in column P keep priority scan unit 64 in a WAIT mode while line microprocessor 56 is processing the channel identified by the number at the outputs of counter/register 504 and flip-flop 524, since signal CCPRUN+ is 1.

a) Receive channel operative.

1) No pause timer 62 timeout.

When signal CCPRUN+ falls to 0, indicating the line microprocessor 56 has completed the CCP, then as shown in column Q, all outputs of PROM 518 are at 1 and the priority scan unit 64 is placed in Mode 7.

2) Pause timer 62 timeout.

Line microprocessor 56 interrupt signal UP2NMI+ at 1 indicates that pause timer 62 timed out; that is, the CCP was active for more than a predetermined number of program steps. The system therefore enters column S. This controls MUX 502 to load the channel number stored in counter/register 504 into FIFO 500 via MUX 502 and stores the channel number at the output of FIFO 500 into counter/register 504. Counter 514 is incremented, advancing priority scan unit 64 to Mode 7.

b) Transmit channel operative.

The system state is column R or T of Figure 5. Therefore, regardless of the state of signal UP2NMI+, the transmit channel number stored in counter/register 504 is loaded into the input of FIFO 500 and the first receive channel number is loaded into counter/register 504 and counter 514 is incremented, placing priority scan unit 64 in Mode 7.

In either event, the output of a NAND gate 526 goes to 0 since the input signals to gate 526 are at 1. This clears counter 516 (which contains $F_{16}$) to the zero count. Also, the output of NAND gate 526 is applied to the reset of flip-flop 524 to prevent its setting on the fall of the carry signal from counter 516.

Mode 7

If the channel number stored in counter/register 504 is being loaded into FIFO 500 as indicated by signal SHFPLS+ at 1, then as shown in column U, PROM 518 output signals LONGSH- and SHFTEN- allow for the completion of the transfer. When flip-flop 528 is reset, the PROM output signals are as shown in column V.

Signal STLOAD- at 0 sets the count 0001 into counter 514, so that the signals applied to the PROM 518 from counter 514 are 0000. This advances the system to column E. The polling operation continues as described in Mode 2.

The line microprocessor 56 generates an address $00F4_{16}$ on line address bus 70 to read the channel number into line paging logic 54. This address is decoded in the interrupt logic 78, which forces the active channel number onto the line data bus 72 for storage in line paging logic 54.

The system as so far described operates with all the peripheral devices being equivalent. However, one of the devices may be a synchronous channel, which requires special treatment as regards its priority not merely for its receive channel but also for its transmit channel, since even in the transmit mode the synchronous device has to be fed with data at a rate which maintains its transmission at the necessary rate.

To achieve this special priority for the transmit channel for the synchronous device, it is assigned the channel numbers 00 and 01. It therefore behaves as if it owns the first two of the receive channel numbers, and thereby has the highest priority for both receive and transmit. However, the rest of the communications controller would recognize the channel number 01 as being a receive channel for device 01, whereas it is actually the transmit channel for device 10 (the true receive channel number for this device being 00).

Circuitry is therefore provided for converting the receive channel number 01 into the transmit channel number 10 for the purpose of the rest of the communications multiplexer, and in particular for the paging logic 54 and line microprocessor 56. This circuitry comprises a decoder 528, fed with the channel number, which recognizes channel number $1_{16}$. (The 0 of the full channel number $01_{16}$ is not required for this). The channel number consists of 5 bits in all.

The lowest 3 bits are fed to the drivers 512 directly, but the 4th bit (from the lower 4-bit hexadecimal digit) is fed via an AND gate 532, which is disabled when the channel number $01_{16}$ appears, so that the lower hexadecimal digit has its 1 bit deleted by gate 532 and converted to 0. Thus the channel number has its lower digit converted to $0_{16}$. Also, the output from the decoder 528 is inverted and fed to an OR gate 530, through which the output of the flip-flop 524 is fed to the drivers 512 as the receive/transmit bit of the channel number. Thus when channel number $01_{16}$ is recognized, a 1 is forced into the upper bit at the same time as the lower digit is changed from 1 to 0, converting the channel number from $01_{16}$ to $10_{16}$. Thus the receive and transmit channel numbers 00 and 01 in the priority scan unit 64 are converted into 00 and 10 on the bus 72.

Of course, the channel numbers 10 and 11 in the priority scan unit 64 have no device corresponding to them, so that although they are present and circulating, they will never be responded to.

The decoder 528 may conveniently be formed by a multiplexer. Of the 4 bits of the channel number, 3 are fed to the select inputs, so that for bits 000, data input 0 is selected, but for any other combination of bits, one of data inputs 1 to 7 will be selected. The 4th bit of the channel number is fed to data input 0, and a logical 0 is fed to all the other data inputs 1 to 7. Hence for channel bits 0001, bits 000 select data input 0 and bit 1 passes through from data input 0 to the output.

The decoder 528 may be enabled by a synchronous signal fed from the synchronous device via the line adaptor interface 66.

# 0049157

- 21 -

## CLAIMS

1. Polling means (64) in a communication multiplexer (8) which couples a plurality of devices (18,22,24) to a main memory (4) and CPU (2), characterized by a register (504) and recirculatory memory (FIFO 500) which together contain a sequence of receive and transmit channel numbers which can be circulated through the register and memory, the devices being polled with the channel numbers as they appear in the register, and the channel number in the register being temporarily excluded from the circulation of the channel numbers on a response from a device so as to change the relative priorities of the channels appropriately.

2. Polling means according to Claim 1, characterized in that the register (504) is a counter/register which is operated as a counter during an initialization mode of operation to generate an initial sequence of channel numbers in the register and memory.

3. Polling means according to either previous Claim, characterized in that the channel numbers are maintained in a sequence giving higher priority to receive channel numbers than to transmit channel numbers.

4. Polling means according to any previous Claim, characterized in that a receive channel number to which a device responds is retained in the register (504) so as to be the first of the receive channel numbers when polling recommences, and a transmit channel number to which a device responds is retained in the register (504) until all other transmit channel numbers have been recirculated and then added to the sequence of transmit channel numbers so as to be the last of the transmit channel numbers when polling recommences.

5. Polling means according to any previous claim, characterized in that the recirculatory memory is a FIFO register (500) the entry into which and the reading from which of channel numbers is controlled by a shift pulse flip-flop (508).

6. Polling means according to any previous Claim, characterized by a counter (514) the counts of which determine corresponding modes of operation of the polling means, and decoding means (PROM 518) responsive to the counter (514) and further signals to control the operation of the polling means in its different modes.

7. Polling means according to any previous Claim, characterized in that it is responsive to a timeout signal occurring after an indication that the transfer of data is completed to enter the polling mode of operation.

8. Polling means according to any previous Claim, characterized by a receive/transmit flip-flop (524) the state of which determines whether a channel number is a receive or a transmit channel number, the channel numbers as held in the register (504) and memory (500) lacking any indication of whether they are receive or transmit channel numbers.

9. A data processing system comprising polling means according to any previous claim in a communications multiplexer which couples a plurality of devices to a main memory and a CPU, characterized in that the communication multiplexer (8) is operative in a synchronous mode with one of the devices and in an asynchronous mode with the remainder of the devices, the synchronous device being enabled by a first receive channel number when in receive mode and by a second receive channel number when in transmit mode, and the polling means include code conversion means (528,530,532) for translating the second receive channel number to one of the transmit channel numbers for processing by the communication multiplexer.

10. A data processing system according to Claim 9, characterized in that the code converter is enabled by a synchronous signal from the synchronous device.

FIG.1

FIG.2